# EUROPEAN PATENT SPECIFICATION

(11) **EP 2 882 011 B1**
(45) Date of publication and mention of the grant of the patent: **05.07.2017**
(21) Application number: 12882461.2
(22) Date of filing: 01.08.2012
(51) Int. Cl.: H01M 2/20, H01M 2/10, H01M 2/30, H01R 11/28

(54) **SECONDARY BATTERY CONNECTING STRUCTURE AND SECONDARY BATTERY APPARATUS PROVIDED WITH SAME**
SEKUNDÄRBATTERIEVERBINDUNGSSTRUKTUR UND SEKUNDÄRBATTERIEVORRICHTUNG DAMIT
STRUCTURE DE CONNEXION DE BATTERIE SECONDAIRE, ET APPAREIL À BATTERIE SECONDAIRE LA COMPRENANT

(43) Date of publication of application: 10.06.2015
(73) Proprietor: Kabushiki Kaisha Toshiba, Minato-ku Tokyo 105-8001 (JP)
(72) Inventor: YAMAMOTO, Hirofumi, Tokyo, 105-8001 (JP); KOIKE, Noboru, Tokyo, 105-8001 (JP); SHIMIZU, Hideo, Tokyo, 105-8001 (JP); YANAGISAWA, Hirotaka, Tokyo, 105-8001 (JP); SHUDO, Tadashi, Tokyo, 105-8001 (JP); WADA, Satoshi, Tokyo, 105-8001 (JP)
(74) Representative: Awapatent AB
(86) International application number: PCT/JP2012/069628
(87) International publication number: WO 2014/020731

(56) References cited:
- WO-A1-2012/043593
- GB-A- 2 061 636
- JP-A- H09 265 975
- JP-A- 2003 162 993
- JP-A- 2010 061 961
- JP-A- 2012 028 061
- JP-A- 2012 043 670
- JP-A- 2012 043 670
- JP-A- 2012 079 710
- JP-U- S5 773 866
- JP-U- S58 147 163
- KR-A- 20090 118 537
- US-A1- 2007 026 306
- US-A1- 2012 129 041

## Description

### Technical Field

The embodiments of the present invention relate to a connection structure which connects an output terminal of a secondary battery, and a secondary battery apparatus comprising the same.

### Background Art

In recent years, secondary batteries have been widely used as power sources for electric vehicles, hybrid electric vehicles, and electric bicycles, or as a power source for electric devices. For example, lithium-ion secondary batteries, which are non-aqueous system secondary batteries, have high output and high energy density, so they are receiving attention as a power source for electric vehicles, etc. Furthermore, in order to obtain higher capacitance and higher output, a battery pack, or a secondary battery apparatus which is obtained by placing a plurality of secondary batteries side by side in a case and connecting them in series or in parallel, is used.

In a battery pack, each of the secondary batteries (hereinafter, referred to as a battery cell) has a positive electrode and a negative electrode. Among a plurality of battery cells, for example, the electrode terminals of two neighboring battery cells are connected to each other by a conductive member such as a bus bar. In this case, the bus bar is positioned with respect to the electrode terminals, and is connected or fixed to the electrode terminals by a bolt joint or by laser welding.

US2012/129041 A1 discloses a connection structure for battery module, a battery module and a method of connecting terminal of battery modules.

GB2061636 A discloses a joining of terminals of electric storage cells to connectors.

JP2012028061 A discloses an electrode terminal connections structure and a bus bar.

### Citation List

### Patent Literature

Patent Literature 1 Jpn. Pat. Appln. KOKAI Publication No. 2009-87721

### Summary of Invention

### Technical Problem

When assembling the battery pack by fastening a bolt to connect the bus bars and the battery cells, the number of work processes increases, and it is necessary to reliably connect the cells without damaging the electrode terminals due to a fastening torque. Furthermore, welding operations requires a large facility, and if a weld fails, it becomes difficult to repair and may cause a decline in production yield.
The present invention was made in consideration of the above points. Therefore, the object is to provide a battery connection structure which is capable of easily and unfailingly connecting the electrode terminal of the secondary battery, and a secondary battery apparatus which comprises such structure.

### Solution to Problem

A battery connection structure solving the above problem is defined in independent claim 1.

### BRIEF DESCRIPTION OF DRAWINGS

FIG. 1 is a perspective view of a secondary battery apparatus relating to a first embodiment of the present invention.
FIG. 2 is a perspective view of a battery cell in the secondary battery apparatus.
FIG. 3 is a cross-sectional view of an electrode terminal part of the battery cell.
FIG. 4 is a perspective view of an electrode terminal of a battery cell according to a modified example.
FIG. 5 is a cross-sectional view of the electrode terminal of the battery cell according to the modified example.
FIG. 6 is a perspective view of a bus bar of the secondary battery apparatus according to the first embodiment.
FIG. 7 is a perspective view of an engagement part of the bus bar shown from another direction.
FIG. 8 is a cross-sectional view of a connection part and the engagement part of the bus bar.
FIG. 9 is a perspective view of a spring pin configuring the connection structure of the secondary battery apparatus.
FIG. 10 is an exploded perspective view of an electrode terminal part of the battery cell and the bus bar of the secondary battery apparatus.
FIG. 11 is a cross-sectional view of an arrangement relationship before connection of the electrode terminal, the bus bar, and the spring pin configuring the connection structure of the secondary battery apparatus.
FIG. 12 is a cross-sectional view of a process of joining the engagement part of the bus bar with the electrode terminal part of the battery cell.
FIG. 13 is an enlarged cross-sectional view of a joined state of a rib of the joining part and the electrode terminal.
FIG. 14 is a cross-sectional view of a state in which the engagement part of the bus bar is joined to the electrode terminal, and the spring pin is pushed in.
FIG. 15 is a perspective view of the battery cell and a joining structure showing a connection process in which the electrode terminal of the battery cell is connected by the bus bar and the spring pin.
FIG. 16 is a cross-sectional view of the electrode terminal in a state where the bus bar and spring pin are connected.
FIG. 17 is a cross-sectional view of the electrode terminal in a state where the bus bar and spring pin are connected.
FIG. 18 is a perspective view of a bus bar according to a second embodiment.
FIG. 19 is a perspective view of a connection structure of a secondary battery apparatus relating to a third embodiment.
FIG. 20 is a perspective view of a bus bar of the secondary battery apparatus according to the third embodiment.
FIG. 21 is a perspective view of a spring pin according to a first modified example.
FIG. 22 is a perspective view of a spring pin according to a second modified example.
FIG. 23 is a perspective view of a spring pin according to a third modified example.
FIG. 24 is a perspective view of a spring pin according to a fourth modified example.
FIG. 25 is a perspective view of a spring pin according to a fifth modified example.

### Brief Description of Embodiments

In the following, the secondary battery apparatus comprising the battery connection structure according to the embodiments will be described in detail with reference to the drawings.

### First Embodiment

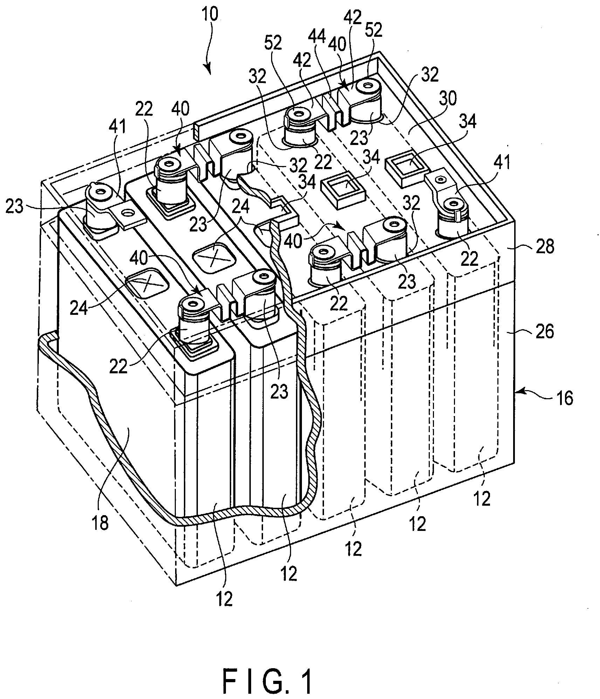

FIG. 1 is a perspective view of a secondary battery apparatus according to a first embodiment. As shown in FIG. 1, a secondary battery apparatus 10 is configured as a battery pack (a battery module) which comprises, for example, a rectangular box-like case 16, a plurality of battery cells 12 (secondary battery cells), for example, five, aligned with predetermined intervals in the case, and an unillustrated control circuit substrate which monitors and controls the voltage and temperature etc. of each battery cell. The electrode terminals of neighboring battery cells 12 are electrically connected to each other by a bus bar 40 which serves as a conductive material. As shown in FIG. 1, the case 16 comprises a rectangular box-like case body 26 which has a bottom wall and an opened top surface, a rectangular plate-like upper case 28 fitted on the top frame of the case body 26 and covering the top surface opening of the case body, and an unillustrated top cover which is detachable from the upper case. The case body 26 and the upper case 28 are made by an injection molding method etc. using synthetic resin with respective insulation properties, such as thermoplastic resin of polycarbonate (PC) and polyphenylene ether (PPE) etc.

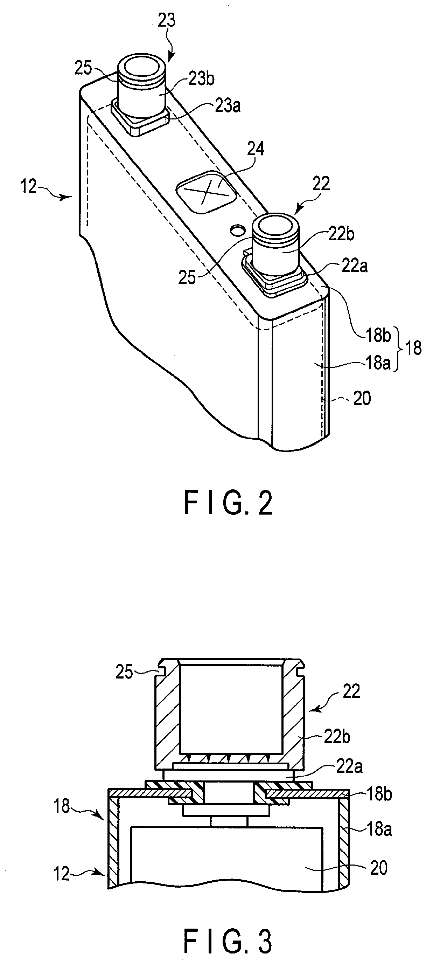

FIG. 2 is a perspective view of an electrode terminal part of the battery cell 12, and FIG. 3 is a cross-sectional view of the electrode terminal part of the battery cell. As shown in FIGS. 1 to 3, each battery cell 12 is configured, for example, as a thin non-aqueous type secondary battery of a lithium ion battery etc. The battery cell 12 comprises a flat rectangular box-like outer container 18 formed by aluminum etc. and an electrode body 20 stored together with nonaqueous electrolyte in the outer container 18. The outer container 18 comprises a container body 18a whose upper end is opened, and a rectangular plate-like lid 18b which is welded to the container body 18a and closes the opening of the container body, thereby forming an air-tight state inside. The electrode body 20 is formed flat and rectangular by winding a positive electrode plate and a negative electrode plate with a separator interposed therebetween, and compressing it in a radial direction.

A positive electrode terminal 22 and a negative electrode terminal 23 are electrode terminals that are provided respectively on both ends of the longitudinal direction of the lid 18b in a protruded manner. The positive electrode terminal 22 and the negative electrode terminal 23 are electrically connected to the positive electrode and the negative electrode of the electrode body 20, respectively. Formed at the center portion of the lid 18b is a pressure release valve 24 functioning as a gas exhaust mechanism. When gas is generated inside the outer container 18 by an unusual mode etc. of the secondary battery 12, and the internal pressure inside the outer container rises to or above a predetermined value, the pressure release valve 24 is opened to lower the internal pressure and prevent malfunctions such as a rupture of the outer container 18.

The positive electrode terminal 22 and the negative electrode terminal 23 of the battery cell 12 comprise bases 22a and 23a formed, for example, in a stepped rectangle, and cylindrical connection terminals 22b and 23b fixed on the base, for example, by welding. The connection terminals 22b and 23b extend almost vertically with respect to the lid 18b. The lower end of the connection terminals 22b and 23b on the bases 22a and 23a side are closed, and the extended end is opened. Also, an engagement groove 25 for locking is formed on the entire circumference of the outer circumference of the extended end portion of the connection terminals 22b and 23b. The engagement groove 25 does not necessarily have to be formed on the entire circumference, and may be formed at least at a position where a lock claw mentioned later on is engageable. Furthermore, instead of using the engagement groove 25, an engagement projection for locking may also be used. The connection terminals 22b and 23b do not necessarily have to be a circular cylindrical shape, and may be a polygonally cylindrical shape, an elliptically cylindrical shape etc. , or in other cylindrical shapes.

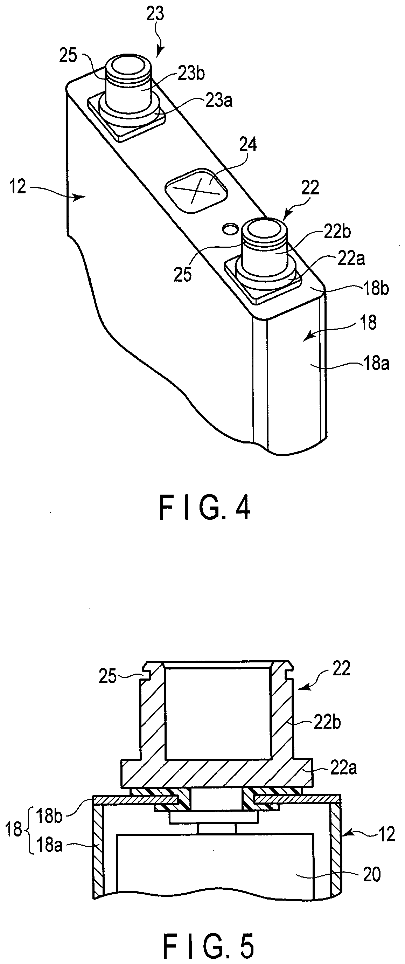

FIG. 4 and FIG. 5 show an electrode terminal of a battery cell 12 according to a modified example. As shown in these drawings, the electrode terminals 22 and 23 may have a configuration in which the cylindrical bases 22a and 23a are integrally formed with the cylindrical connection terminals 22b and 23b, respectively.

The electrode terminals 22 and 23 may be formed of conductive metal such as aluminum, copper, and gold etc., or be formed of other metals with gold plated surfaces.

As shown in FIG. 1, in the case 16, a plurality of battery cells 12 are aligned in a row in a state where the principle surfaces of the outer containers 18 face each other at predetermined intervals, and are stored. In the present embodiment, the positive terminal 22 and the negative terminal 23 of two neighboring battery cells 12 are oppositionally aligned in a 180-degree inverted manner. In other words, the five battery cells 12 are arranged so that the positive electrode terminal 22 and the negative electrode terminal 23 are aligned alternately in two rows along the array direction.

The upper case 28 covers the case body 26 which stores the battery cell 12 from above and is attached to the case body 26. In this manner, the case 16 is configured having an overall rectangular box shape. The upper case 28 has a rectangular plate-like ceiling wall 30 which is approximately the same size as the bottom wall of the case body 26. The ceiling wall 30 faces the bottom wall of the case body 26 in parallel, and covers the upper portion of the plurality of battery cells 12. On the ceiling wall 30 is formed a plurality of openings 32 for inserting the electrode terminals 22 and 23 of the battery cell 12, respectively, and a plurality of exhaust holes 34.

The battery cell 12 stored in the case body 26 abuts the inner surface of the ceiling wall 30 of the upper case 28 to specifically position the upper end of the electrode terminals 22 and 23. The positive electrode terminal 22 and the negative electrode terminal 23 of each battery cell 12 are inserted through each corresponding opening 32 of the ceiling wall 30 and protrude above the ceiling wall. The pressure release valve 24 of each battery cell 12 faces the exhaust hole 34 of the ceiling wall 30.

As shown in FIG. 1, a plurality of battery cells 12 are connected in series by a plurality of bus bars 40. An output terminal is configured by connecting a bus bar 41 to an electric cell positioned on one end and a battery cell positioned on the other end of a group of electric cells.

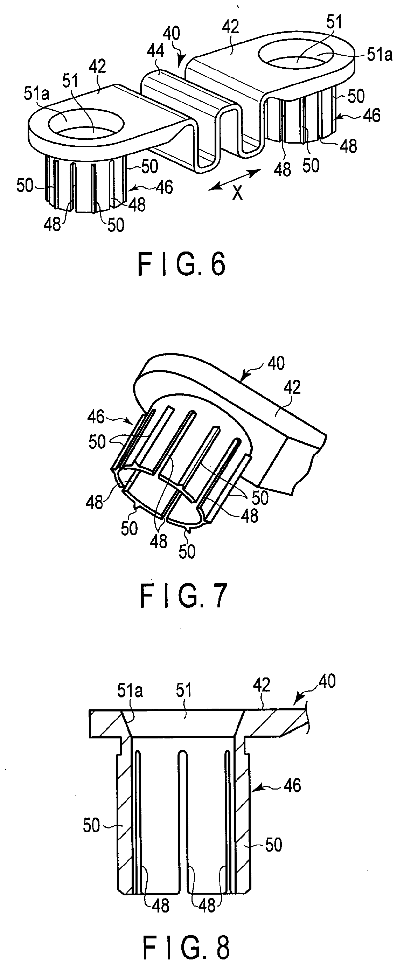

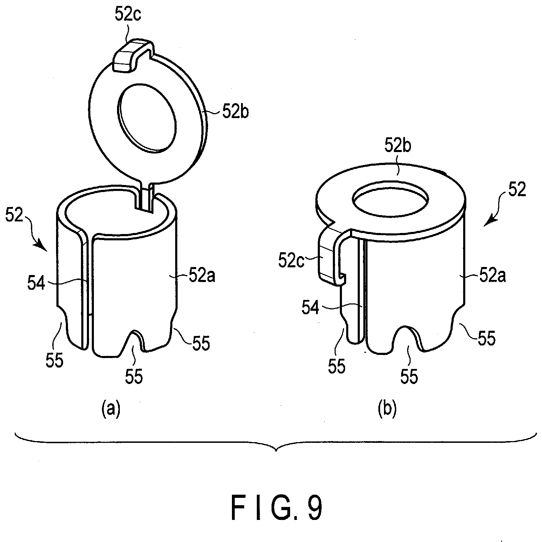

FIG. 6 is a perspective view of a bus bar 40, FIG. 7 is a perspective view of a connection part of the bus bar, FIG. 8 is a cross-sectional view of the bus bar, and FIG. 9 is a perspective view of a spring pin (spring member) which configures the connection structure together with the bus bar.

As shown in FIGS. 6, 7, and 8, the bus bar 40 comprises a pair of plate-like connection parts 42, a coupling part 44 which is bent wave-like and couples the pair of connection parts 42 together, and a pair of cylindrical engagement parts 46 which is extended in one direction from the connection part 42, and is formed integrally by a conductive material, such as aluminum, aluminum alloy, copper, copper alloy, nickel alloy, etc.

The pair of connection parts 42 is aligned on the same plane and at a predetermined interval with respect to each other. The coupling part 44 which couples the pair of connection parts 42 is formed by bending a plate material whose plate thickness is thinner than that of the connection part 42 into a wave-like shape, and is elastically deformable along a longitudinal direction (pitch direction) X which joins the pair of connection parts 42. The elastic deformation of the coupling part 44 allows the interval between the connection parts 42 to be adjusted to some extent in accordance with variances mentioned later on.

The engagement part 46 is, for example, formed cylindrically, and is extended almost vertically with respect to the connection part 42. The engagement part 46 comprises a base end coupled to the connection part 42, and an opened free end. The engagement part 46 comprises a plurality of slits 48 extending from near the base end to the free end, respectively, and a plurality of engagement protrusions, such as elongated ribs 50, protruding on the outer circumference surface.

The slits 48 are extended linearly along the axial direction of the engagement part 46, respectively, and are formed at predetermined intervals along a circumference direction of the engagement part 46. Each of the slits 48 does not necessarily have to be extended in a direction parallel to the axis of the engagement part 46, and may be extended diagonally with respect to the axis, or extended in a curve.

The ribs 50 are extended linearly along the axial direction of the engagement part 46. The ribs 50 are extended from a position slightly away from the base end of the engagement part 46 up to the free end of the engagement part 46. The plurality of ribs 50 are such that at least one rib 50 is provided between each of the two neighboring slits 48. The cross-sectional shape of each rib 50 is formed, for example, triangular, trapezoidal, or semi-circular. Also, the engagement protrusions do not necessarily have to be rib-like, they may also be a plurality of dot-shaped or island-shaped protrusions.

At each connection part 42 of the bus bar 40, a circular opening 51 is formed at a position facing the base end of the engagement part 46 and is communicated through the inner opening of the engagement part 46. In the present embodiment, the opening 51 is defined by a tapered surface 51a that is tapered towards the engagement part 46, and has its smallest diameter formed identical to the inner diameter of the engagement part 46.

The engagement part 46 is formed engageable with the connection terminals 22b and 23b of the battery cell 12. In other words, the outer diameter of the engagement part 46 is formed slightly smaller than the inner diameter of the connection terminals 22b and 23b. Furthermore, the outer diameter of the engagement part 46 including the protrusion height of the rib 50 is formed slightly larger than the inner diameter of the connection terminals 22b and 23b. By pushing the engagement part 46 into the inner hole of the connection terminals 22b and 23b from its free end (lower end) side, the rib 50 slides on the inner circumference surface of the connection terminal, is crushed while scraping away the inner circumference surface, and fit tightly on the inner circumference surface of the connection terminal. In this manner, the engagement part 46 fits inside the inner hole of the connection terminals 22b and 23b, and is mechanically and electrically connected to the connection terminal.

The engagement part 46 does not necessarily have to be a circular cylindrical shape, and may be a polygonally cylindrical shape, an elliptically cylindrical shape etc., or other cylindrical shapes. Also, as mentioned above, since the rib 50 should be crushed comparatively easily, it is desirable for the bus bar 40 to be formed of a material softer than those of the connection terminals 22b and 23b. Furthermore, the bus bar 40 may be formed of a material softer than that of the spring pin mentioned later on. For example, the connection terminals 22b and 23b are formed of A3000 series aluminum, and the bus bar 40 is formed of A1000 series aluminum.

FIG. 9 shows a spring pin (backup pin) as a spring member which configures a part of the connection structure. As shown in FIGS. 1 and 9, a spring pin 52 is fitted in the inner hole of the engagement part 46 of the bus bar 40, and serves to press the engagement part 46 against the inner circumference surface of the connection terminals 22b and 23b. The spring pin 52 has, for example, a cylindrically formed spring body 52a, a ring plate 52b configuring a flange, and a lock claw 52c which protrudes from the ring plate. The spring body 52a has a slit 54 which extends from one end to the other end along the axial direction. In other words, the spring body 52a is formed by, for example, cylindrically bending a stainless plate having a plate thickness of 0.4mm so that both ends face each other leaving a predetermined gap (slit) 54. The outer diameter of the spring body 52a is formed slightly larger than the inner diameter of the engagement portion 46 of the bus bar 40. A plurality of notches 55 are formed on the rim of one end of the spring body 52a in the axial direction.

The ring plate 52b is attached on the other end of the spring body 52a in the axial direction in a bendable manner, or is formed integrally with the spring body 52a. The ring plate 52b is bent in a manner to overlap one end of the spring body 52a in the axial direction and forms an annular flange on one end of the spring body 52a. A flange formed in the above manner allows the spring member 52a to be pushed in by pushing the flange when pushing the spring pin 52 into the engagement part 46, thereby improving insertability. Furthermore, since the ring plate 52b is configured in a manner so that a part of it is connected to the spring body 52a, the bending processability of the spring member 52a itself is improved, allowing the spring force to become more even.

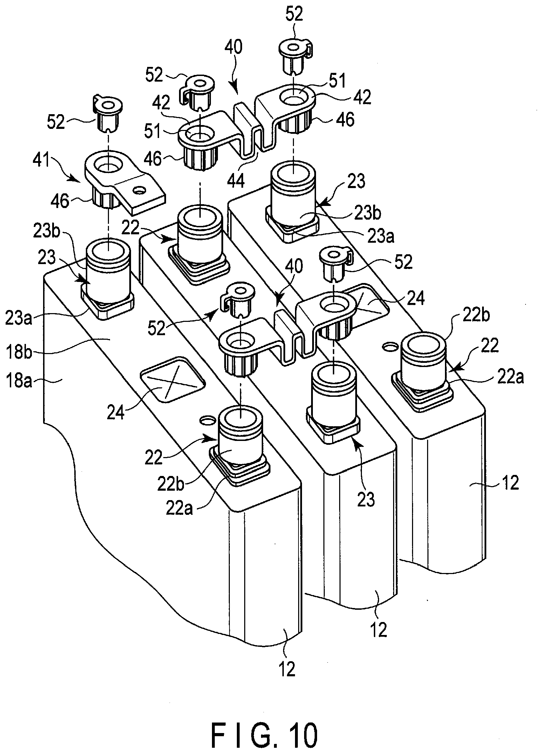

As long as the spring pin 52 is capable of stably depressing the engagement part 46, it does not have to be limited to metal and can be formed of other materials such as synthetic resin. As shown in FIGS. 1 and 10, bus bars 41 which configure the output terminals on the positive electrode side and the negative electrode side comprise one plate-like connection part 42, a cylindrical engagement part 46 which is extended in one direction from the lower surface of the connection part 42, and a plate-like output terminal 56 extended in a cranked manner from the connection part 42, and are formed integrally by a conductive material such as aluminum, aluminum alloy, copper, copper alloy, and nickel alloy. On the output terminal 56 is formed a screw hole in which a bolt can be screwed. The other parts such as the connection part 42 and engagement part 46 are configured in the same manner as the connection part and the engagement part of the earlier mentioned bus bar 40. In addition, a spring pin 52, which is the same as the spring pin mentioned above, is pushed into and fitted in the engagement part 46 of the bus bar 41.

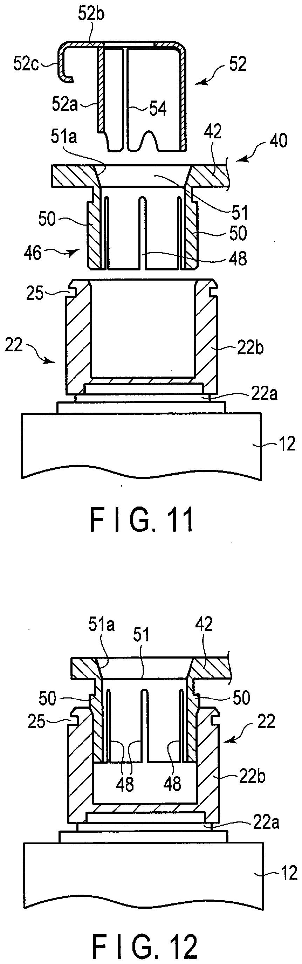

The connection structure, which comprises the bus bars 40 and 41 and the spring pin 52 configured in the manner mentioned above, is connected to the electrode terminals 22 and 23 of the battery cell 12 in the following manner. First, after five battery cells 12 are stored and arranged in the case body 26, the upper case 28 is covered over the case body 26 and is fixed. Next, as shown in FIGS. 10 and 11, the bus bar 40 is aligned with respect to the connection terminals 22b and 23b of two neighboring battery cells 12. The engagement parts 46 are arranged respectively above the connection terminals 22b and 23b in a coaxial manner, and the two engagement parts 46 are pressed into the inner hole of the connection terminals 22b and 23b from above. In the case where the space between the connection terminals 22b and 23b is somewhat out of alignment due to variances etc., the coupling part 44 of the bus bar 40 extends or contracts in a longitudinal direction and absorbs the variances.

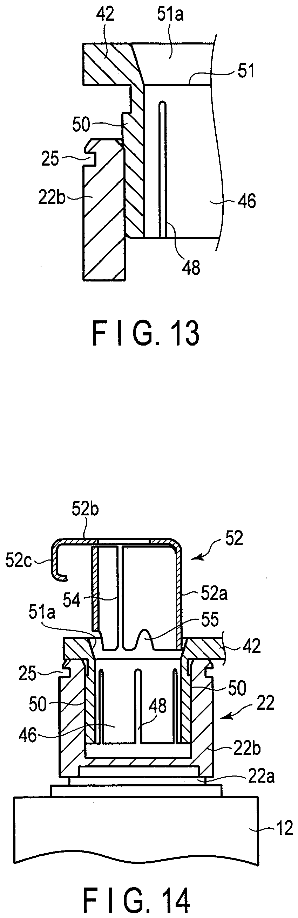

As shown in FIGS. 12 and 13, the engagement parts 46 are inserted into the inner holes of the connection terminals 22b and 23b from the free ends (lower ends) thereof, and pushed into the connection terminals until the connection parts 42 abut the upper ends of the connection terminals 22b and 23b. By pushing in the engagement parts, the ribs 50 slide on the inner circumference surface of the connection terminals 22b and 23b, are crushed while scraping away the inner circumference surface, and are tightly fit on the inner circumference surface of the connection terminals 22b and 23b. In this manner, the engagement parts 46 fit inside the inner holes of the connection terminals 22b and 23b, and are mechanically and electrically connected with the connection terminals.

Since the area between the slits 48 of the engagement part 46 is in the shape of a wing with the attached rib 50, when inserted in the connection terminals 22b and 23b, the area comes in contact with the connection terminals while the rib 50 is being scraped, and becomes susceptible to the spring force from inside. The push load and the resistance value of the engagement part 46 change according to the number of and the width of ribs 50. The number of ribs is adjustable in accordance with the necessary spec. If the number of ribs 50 is reduced, the push load decreases and the resistance value increases.

Since the rib 50 of the engagement part 47 is no longer near the base end of the engagement part 46, that is, the connection part 42, there will be no load when pushing and inserting the engagement part 46 at the end, and the fitted state can be confirmed. Since the scraped residue of the rib 50 escapes in this portion, the load would not excessively increase. Furthermore, the shape of the engagement part 46 when being inserted into the connection terminals 22b and 23b may be determined in accordance with the width of the slit 48. In other words, by adjusting the width of the slit 48, the rib 50 may be scraped reliably without excessively inclining the wing portion on the inner side.

After the engagement part 46 is fitted in the connection terminals 22b and 23b, as shown in FIGS. 14, 15, and 16, the spring pin 52 is inserted into and fitted in the inner hole of the engagement part 46 of the bus bar 40. The spring pin 52 is pushed into the engagement part 46 from the lower end side of the spring body 52a through the opening 51 of the connection part 42. When doing so, by forming a flange by bending the ring plate 52b, the spring body 52a can be pushed in via this flange. Furthermore, since the opening 51 of the connection part 42 is chamfered to form a tapered face 51a, when inserting the spring pin, the spring body 52a may be easily positioned (variance absorption) at an insertion position, and enabling a reduction in insertion load. Furthermore, by providing a notch 55 at the lower end (distal end) of the spring body 52a, when pushing the spring body 52a into the engagement part 46, the distal end portion may be easily deformed in the tapered direction. This allows the spring body 52a to be pushed easily into the inner hole of the engagement part 46.

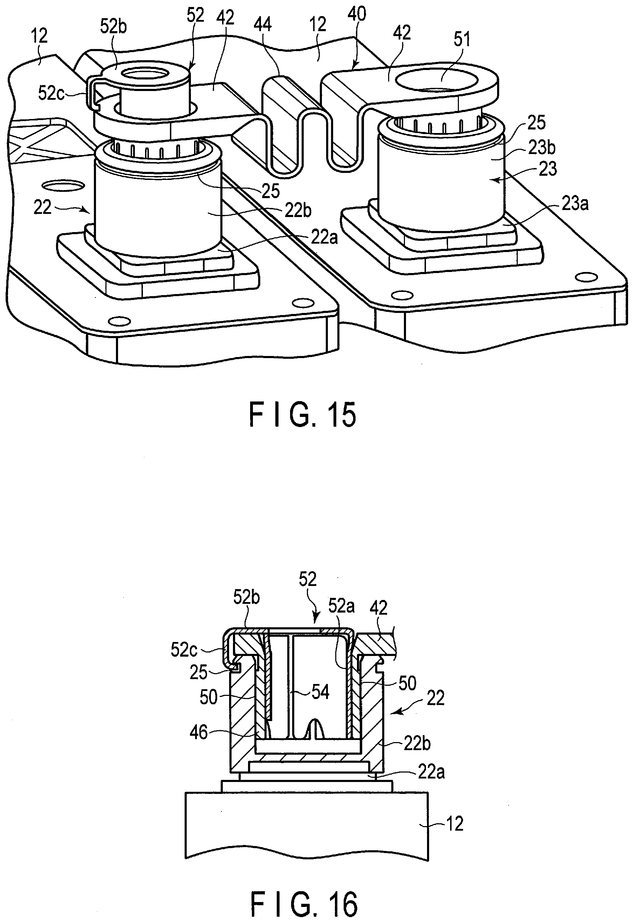

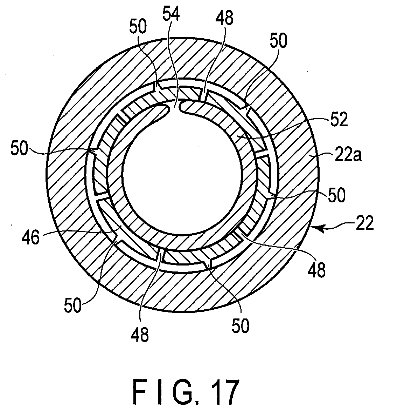

As shown in FIGS. 16 and 17, as the spring body 52a is pushed into the inner hole of the engagement part 46, the spring body 52a is elastically deformed by being pressed from the outer circumference side in such a manner that the width of the slit 54 becomes narrow, in accordance with which a certain spring force is added to the engagement part 46 of the bus bar 40. In other words, the spring member 52a presses the engagement part 46 in an outward radial direction, and presses the rib 50 of the engagement part 46 against the inner circumference of the connection terminals 22b and 23b. In this manner, the rib 50 is further crushed and brought in contact with the connection terminals 22b and 23b with further reliability. Furthermore, the spring pin 52 is pushed in until the ring plate 52b abuts the upper end of the connection part 42, and the lock claw 52c is engaged with the engage groove 25. In this manner, the spring pin 52 can be confirmed to be locked and attached at an insertion position.

By inserting the spring pin 52 having a spring force into the engagement part 46 of the bus bar 40 in this manner, the contact force between the connection terminals 22b and 23b and the bus bar 40 is maintained, and electric resistance can be prevented from increasing by pressing the rib 50 of the engagement part 46 against the inner circumference surface of the connection terminals 22b and 23b. Simultaneously, the bus bar 40 can be prevented from becoming disconnected.

The above battery connection structure allows the electrode terminals 22 and 23 of the two neighboring battery cells 12 to be electrically connected to each other.

In the same manner as the bus bar 40, the bus bar 41 configuring the output terminal is also such that, after the engagement part 46 is pushed into the inner hole of the electrode terminal 23 (or 22), the spring pin 52 is inserted in the inner hole of the engagement part 46, and the contact force between the connection terminals 22b and 23b and the bus bar 41 is maintained. In this manner, the bus bar 41 is connected to one of the electrode terminals 22 (or 23) of the battery cell 12. According to the secondary battery apparatus comprising the connection structure configured in the above manner, by a simple operation of only pushing the engagement part 46 of the bus bar 40 into the connection terminal of the battery cell 12, the battery cells can be electrically connected to each other.

Therefore, bolting or welding would not be necessary for the bus bar, allowing a reduction in assembly operations, and making large production facilities unnecessary. Unlike bolting, a tightening torque would not affect the connection terminal, and the battery cells can be connected to each other merely by inserting the bus bar and the spring pin. In addition, unlike when connecting by welding, a failure due to welding would not occur, and, because only the bus bar or the spring pin is replaced, production yield would improve. When repairing or replacing, it is possible to pull out the spring pin by using the flange of the spring pin.

In electric connection using a contact process, even if it is electrically stable upon connection, there is a possibility that resistance may increase due to the passage of time and environmental changes. The secondary battery apparatus according to the present embodiment has a structure which prevents stress relaxation and an increase in electric resistance by pressing the engagement part 46 with the spring pin 52 to press the engagement part 46 against the connection terminal. Furthermore, when engaged with the connection terminals 22b and 23b, the rib 50 of the bus bar 40 comes in contact with the connection terminals 22b and 23b while scraping the inner circumference surface thereof. Simultaneously, as the rib 50 is scraped, a solid connection is made with the base material of the engagement part of the connection terminal. Furthermore, as the wing portion of the engagement part 46, that is, the portion between the slits 48, and the rib 50 are pressed against the inner circumference surface side of the connection terminal by the spring pin, the contact force is maintained. Since there is no air space between the rib 50 and the connection terminals 22b and 23b, there is no concern of corrosion caused by oxidation etc., and resistance caused by the passage of time and environmental changes may be prevented from increasing.

Therefore, a battery connection structure which is capable of easily and unfailingly connecting the electrode terminal of the secondary battery, and a secondary battery apparatus which comprises such structure are obtained. In this manner, a secondary battery apparatus with improved assemblability is obtained.

The battery connection structure and the bus bar of the secondary battery apparatus according to other embodiments will be explained below. In the following embodiments, for the portions that are the same as those in the first embodiment mentioned above, the same reference symbols will be given, and detailed explanations thereof will be omitted. Portions different from those in the first embodiment will be explained in detail.

### (Second Embodiment)

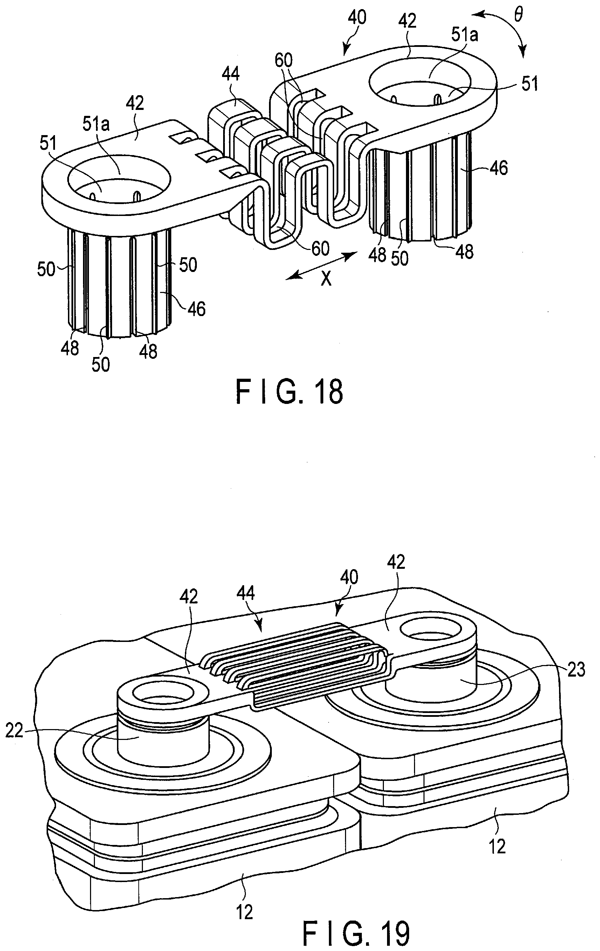

A secondary battery apparatus according to the second embodiment will be explained below. FIG. 18 shows a bus bar of the secondary battery apparatus according to the second embodiment. As shown in FIG. 18, according to the second embodiment, a plurality of slits 60 are formed on a coupling part 44 of a bus bar 40. These slits 60 extend along the longitudinal direction of the bus bar 40, that is, along the direction in which a pair of engagement parts 46 is joined, and are placed at intervals in a direction perpendicular to this direction.

By providing such slits 60, the coupling part 44 of the bus bar 40 becomes elastically deformable in a rotation direction θ, in addition to the longitudinal direction (pitch direction) X. When inserting the pair of engagement parts 46 of the bus bar 40 into the connection terminals 22b and 23b, the distal end parts of the engagement parts 46 are pushed in simultaneously, therefore the positioning of the engagement parts and the connection terminals becomes precise. By configuring the coupling part 44 deformable in the longitudinal direction X and the rotation direction θ as mentioned above, the variances upon connection can be accomodated.

In the second embodiment, other configurations are the same as those of the first embodiment mentioned earlier, and the same effect as the first embodiment mentioned above can be obtained.

### (Third Embodiment)

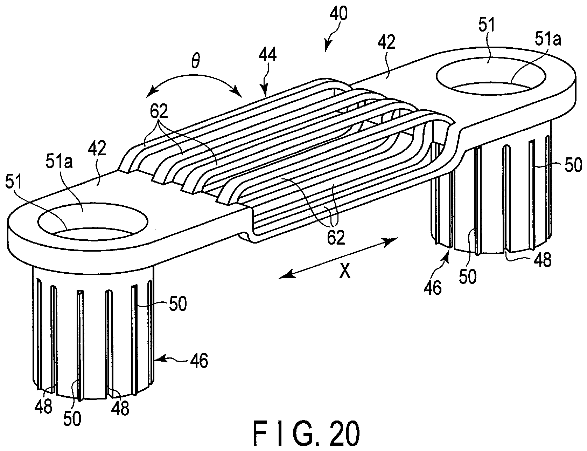

A secondary battery apparatus according to the third embodiment will be explained below. FIGS. 19 and 20 show a battery cell and a bus bar of the secondary battery apparatus according to the third embodiment. As shown in FIG. 18, according to the second embodiment, a coupling part 44 of the bus bar 40 is formed of a plurality of thin long bridges 62 extending between the two connection parts 42. A plurality of bridges 62 are aligned at intervals in a direction perpendicular to the direction passing through the two connection parts 42, and also at intervals in a thickness direction of the connection parts 42.

Such coupling part 44 becomes elastically deformable not only in the longitudinal direction (pitch direction) X of the bus bar 40, but also in the rotation direction θ. Therefore, when inserting the pair of engagement parts 46 of the bus bar 40 into the connection terminals 22b and 23b, the variances between the engagement parts and the connection terminals may be easily accomodated by the elastic deformation of the coupling part 44. Accordingly, the bus bar 40 may be easily and unfailingly connected to the connection terminals 22b and 23b of the battery cell 12.

In the third embodiment, other configurations are the same as those of the first embodiment mentioned earlier, and the same effect as the first embodiment mentioned above can be obtained. A modified example of a spring pin 52 configuring a battery connection structure is explained below.

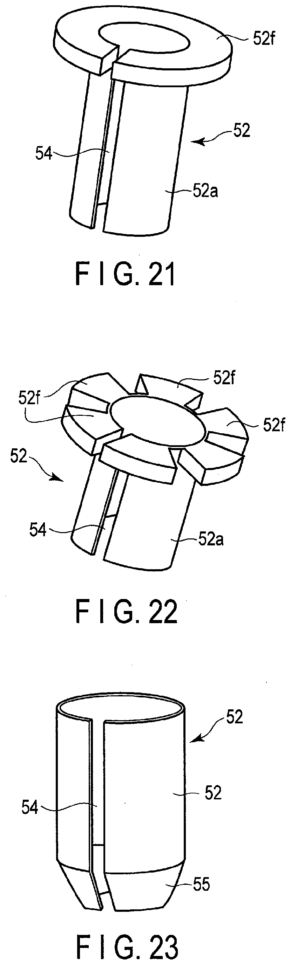

According to the first modified example shown in FIG. 21, the spring pin 52 has a circular cylindrical spring body 52a and an almost annular flange 52f formed on the outer circumference at one end of the spring body. The flange 52f is formed integrally with the spring body 52a and is bent simultaneously with the spring body 52a.

According to the second modified example shown in FIG. 22, a plurality of notches spaced apart in a circumferential direction are formed on the flange 52f. The notches on the flange 52f are provided to make the spring force near the flange even and facilitate the bending process.

According to the third modified example shown in FIG. 23, the spring body 52a of the spring pin 52 is formed in a cylindrical shape. The lower end portion (end portion on the inserting side) 55 is formed in a tapered shape. The tapered shape of the end portion on the inserting side reduces the load upon insertion into the bus bar, and, at the same time, facilitates positioning. In other words, the tapered shape of the distal end portion allows the tapered part to enter the engagement part 46 of the bus bar 40 upon insertion without imparting additionalforce, and completes positioning. Subsequently, by inserting the cylindrical portion of the spring body 52 into the engagement part 46, a certain spring force can be added to the bus bar.

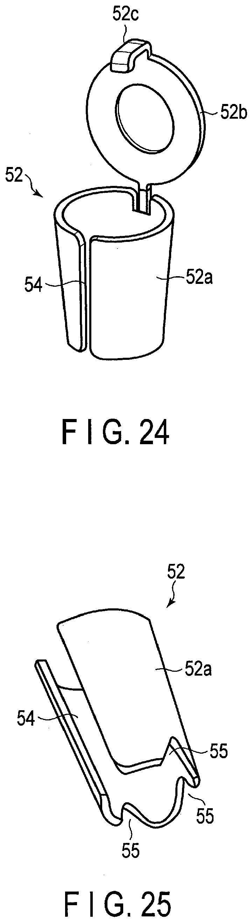

According to the third modified example shown in FIG. 24, a spring body 52a of a spring pin 52 is formed in a circular truncated cone, in which the insertion end side has a reduced diameter. In this case, the bending process of the spring body 52a is facilitated. By forming the spring body 52a in a tapered shape with an angle the same as the angle at which the engagement part falls inwards when inserting the engagement part 46 of the bus bar 40 into the connection terminal, the spring force may be increased without increasing the insertion load.

According to the fourth modified example shown in FIG. 25, a plurality of notches 55 are formed on the distal end portion of the spring body of the third modified example. By forming the notches 55, without having to form the distal end portion in a tapered shape, the distal end of the spring body 52a can be narrowed, facililtating insertion of the bus bar 40 into the engagement part 46.

It is to be noted that the present invention is not limited exactly to the above-described embodiments or modified examples, and can be provided by modifying the constituent elements without departing from the gist of the invention in the embodiment stages. Furthermore, by suitably combining the plurality of constituent features disclosed in the embodiments, various inventions may be formed. For example, some of the constituent features may be deleted from the entire constituent feature described in the embodiments. Furthermore, constituent features among different embodiments may be suitably combined.

For example, the shapes of the engagement part of the bus bar and the electrode terminal do not necessarily have to be cylindrical, and may be other shapes. In other words, the engagement part and the electrode terminal need to be in a shape that is engageable to each other. Furthermore, since the engagement part is configured to be pressed against the inner surface of the connection terminal by the spring member to ensure contact, the engagement part may also be configured without engagement protrusions or slits. Furthermore, it may also be configured without comprising the engagement protrusions or the slits.

The number of secondary battery cells configuring a battery cell group, the shape of the case, and the structure etc. may be suitably changed as needed without being limited to the above-mentioned embodiments. The bus bar is not limited to a configuration comprising a pair of connection parts and a pair of engagement parts, therefore, and may also be a configuration comprising three or more connection parts and three or more engagement parts, which are connected to three or more electrode terminals. As long as the spring member generates a spring force that pushes the engagement part of the bus bar against the electrode terminal from inside and can be inserted in the inner hole of the engagement part, it does not necessarily have to be in a circular cylindrical shape or a truncated cone shape, and may be in other cylindrical shapes, helical shapes, or basket shapes etc.

### Reference Signs List

10... Secondary battery apparatus, 12... Battery cell, 16... Case, 18... Outer container, 18a... Container body, 18b... lid, 22... Positive electrode terminal, 23... Negative electrode terminal, 22a, 23a... Base, 22b, 23b... Connection terminal, 25... Engagement groove, 40... Bus bar, 41... Bus bar (Output terminal), 44... Coupling part, 46... Engagement part, 48... Slit, 50... Rib, 52... Spring pin, 52a... Spring body, 54... Slit, 52b... Ring plate, 52c... Lock claw

## Claims

1. A battery connection structure for connecting a cylindrical electrode terminal (23) provided on a battery cell and another electrode terminal (23) provided on another battery cell, **characterized by** comprising:
a connection member (40), formed of conductive material, which integrally comprises two connection parts (42) and two cylindrical engagement parts (46) extending from the connection parts (42) the cylindrical engagement parts (46) being configured to be respectively engaged in an inner hole of the electrode terminal (23); and
a spring member (52) to be fitted in an inner hole of the cylindrical engagement part (46) and configured to press the cylindrical engagement part (46) against an inner surface of the electrode terminal (23).

2. The battery connection structure according to claim 1, wherein the engagement part (46) comprises a slit (48) extending from a base end of the connection part side to a free end of the engagement part (46), and an engagement protrusion (50) which is disposed protruding on an outer circumference of the engagement part (46) and comes in contact with an inner surface of the electrode terminal (23).

3. The battery connection structure according to claim 2, wherein the engagement protrusion (50) comprises a plurality of ribs extending from near a base end to the free end of the engagement part (46).

4. The battery connection structure according to claim 3, wherein the plurality of ribs extend along an axial direction of the engagement part (46) and are provided at intervals in a circumferential direction of the engagement part (46).

5. The battery connection structure according to claim 4, wherein the engagement part (46) comprises the plurality of slits (48) provided at intervals in a circumferential direction, and
the engagement protrusion (50) is provided in an area between the slits (48) on the engagement part (46).

6. The battery connection structure according to one of claims 1 to 5, wherein the connection member (40) integrally comprises two of the connection parts (42) positioned at intervals from each other, two of the engagement parts (46) protruding from the connection part (42), and a coupling part (44) which couples the two connection parts (42) with each other.

7. The battery connection structure according to claim 6, wherein the coupling part (44) is formed elastically deformable in a direction in which the two connection parts (42) come in contact and separate.

8. The battery connection structure according to claim 7, wherein the coupling part (44) is formed elastically deformable in a direction in which the two engagement parts (46) are mutually displaced in a rotational direction.

9. The battery connection structure according to one of claims 1 to 8, wherein the spring member (52) comprises a cylindrical spring body (52a) which comprises a slit (54) extending from an end to the other end in an axial direction.

10. The battery connection structure according to claim 9, wherein an end portion on an insertion side of the spring body (52a) is formed in a tapered shape.

11. The battery connection structure according to claim 9, wherein the spring body (52a) comprises a notch (55) formed on an end portion on an insertion side of the spring body (52a).

12. The battery connection structure according to one of claims 9 to 11, wherein the spring member (52) comprises an annular flange provided on an end opposite the end on the insertion side of the spring body (52a).

13. The battery connection structure according to one of claims 1 to 12, wherein the connection member (40) is formed of one of aluminum or aluminum alloy, pure copper or copper alloy, and nickel metal.

14. A secondary battery apparatus, comprising:
a plurality of battery cells comprising a cylindrical electrode terminal (23) and arranged respectively side by side;
a case accommodating the plurality of battery cells; and
a battery connection structure according to any of the claims 1-13.

## Patentansprüche

1. Batterieverbindungsaufbau zum Verbinden eines zylindrischen Elektrodenanschlusses (23), der an einer Batteriezelle bereitgestellt ist, und einem anderen Elektronenanschluss (23), der an einer anderen Batteriezelle bereitgestellt ist, **gekennzeichnet durch** Umfassen von:
einem Verbindungselement (40), das aus einem leitenden Material ausgebildet ist, welches zwei Verbindungsteile (42) und zwei zylindrische Eingriffsteile (46) integral umfasst, die sich von den Verbindungsteilen (42) erstrecken, wobei die zylindrischen Eingriffsteile (46) dazu ausgestaltet sind, jeweils in einem inneren Loch des Elektrodenanschlusses (23) in Eingriff zu sein; und
ein Federelement (52), das in ein inneres Loch des zylindrischen Eingriffsteils (46) eingepasst wird und dazu ausgestaltet ist, den zylindrischen Eingriffsteil (46) gegen die innere Oberfläche des Elektrodenanschlusses (23) zu drücken.

2. Batterieverbindungsaufbau nach Anspruch 1, wobei der Eingriffsteil (46) einen Schlitz (48), der sich von einem Basisende der Verbindungsteilseite zu einem freien Ende des Eingriffsteils (46) erstreckt, und ein Eingriffsvorsprung (50) umfasst, der an einem äußeren Umfang des Eingriffsteils (46) hervorstehend angeordnet ist und in Kontakt mit einer inneren Oberfläche des Elektrodenanschlusses (23) kommt.

3. Batterieverbindungsaufbau nach Anspruch 2, wobei der Eingriffsvorsprung (50) mehrere Rippen umfasst, die sich von der Nähe eines Basisendes zu dem freien Ende des Eingriffsteils (46) erstrecken.

4. Batterieverbindungsaufbau nach Anspruch 3, wobei die mehreren Rippen sich entlang einer axialen Richtung des Eingriffsteils (46) erstrecken und in Abständen in einer umfänglichen Richtung des Eingriffsteils (46) bereitgestellt sind.

5. Batterieverbindungsaufbau nach Anspruch 4, wobei der Eingriffsteil (46) mehrere Schlitze (48) umfasst, die in Abständen in einer umfänglichen Richtung bereitgestellt sind, und
der Eingriffsvorsprung (50) in einem Bereich zwischen den Schlitzen (48) an dem Eingriffsteil (46) bereitgestellt ist.

6. Batterieverbindungsaufbau nach einem der Ansprüche 1-5, wobei das Verbindungselement (40) zwei der Verbindungsteile (42), die in Abständen voneinander angeordnet sind, zwei der Eingriffsteile (46), die von dem Verbindungsteil (42) hervorstehenden, und einen Kopplungsteil (44) integral umfasst, der zwei Verbindungsteile 42 miteinander koppelt.

7. Batterieverbindungsaufbau nach Anspruch 6, wobei der Kopplungsteil (44) elastisch in einer Richtung verformbar ausgebildet ist, in welcher die zwei Verbindungsteile (42) in Kontakt kommen und sich trennen.

8. Batterieverbindungsaufbau nach Anspruch 7, wobei der Kopplungsteil (44) elastisch in einer Richtung verformbar ausgebildet ist, in der die zwei Eingriffsteile (46) gemeinsam in einer Drehrichtung versetzt sind.

9. Batterieverbindungsaufbau nach einem der Ansprüche 1-8, wobei das Federelement (52) einen zylindrischen Federkörper (52a) umfasst, der einen Schlitz (54) umfasst, der sich von einem Ende zu dem anderen Ende in einer axialen Richtung erstreckt.

10. Batterieverbindungsaufbau nach Anspruch 9, wobei ein Endabschnitt an einer Einführseite des Federkörpers (52a) in einer verjüngten Form ausgebildet ist.

11. Batterieverbindungsaufbau nach Anspruch 9, wobei der Federkörper (52a) eine Kerbe (55) aufweist, die an einem Endabschnitt eine einzelne Seite des Federkörpers (52a) ausgebildet ist.

12. Batterieverbindungsaufbau nach einem der Ansprüche 9-11, wobei das Federelement (52) einen ringförmigen Flansch umfasst, der an einem Ende gegenüber dem Ende der Einführseite des Federkörpers (52a) bereitgestellt ist.

13. Batterieverbindungsaufbau nach einem der Ansprüche 1-12, wobei das Verbindungselement (40) aus einem aus Aluminium oder einer Aluminiumlegierung, reinem Kupfer oder einer Kupferlegierung und einem Nickel Metall ausgebildet ist.

14. Sekundärbatterievorrichtung, umfassend:
mehrere Batteriezellen, die einen zylindrischen Elektronenanschluss (23) umfassen und jeweils nebeneinander angeordnet sind;
ein Gehäuse, das die mehreren Batteriezellen aufnimmt; und
einen Batterieverbindungsaufbau nach einem der Ansprüche 1-13.

## Revendications

1. Structure de connexion de batterie pour connecter une borne d'électrode cylindrique (23) prévue sur un élément de batterie et une autre borne d'électrode (23) prévue sur un autre élément de batterie, **caractérisée en ce qu'**elle comprend :
un élément de connexion (40) formé avec un matériau conducteur, qui comprend de manière solidaire deux parties de connexion (42) et deux parties de mise en prise cylindriques (46) s'étendant à partir des parties de connexion (42), les parties de mise en prise cylindriques (46) étant configurées pour être mises en prise respectivement dans un trou interne de la borne d'électrode (23) ; et
un élément de ressort (52) destiné à être monté dans un trou interne de la partie de mise en prise cylindrique (46) et configuré pour comprimer la partie de mise en prise cylindrique (46) contre une surface interne de la borne d'électrode (23).

2. Structure de connexion de batterie selon la revendication 1, dans laquelle la partie de mise en prise (46) comprend une fente (48) s'étendant à partir d'une extrémité de base du côté de la partie de connexion jusqu'à une extrémité libre de la partie de mise en prise (46), et une saillie de mise en prise (50) qui est disposée en saillie sur une circonférence externe de la partie de mise en prise (46) et vient en contact avec une surface interne de la borne d'électrode (23).

3. Structure de connexion de batterie selon la revendication 2, dans laquelle la saillie de mise en prise (50) comprend une pluralité de nervures s'étendant à partir de la proximité d'une extrémité de base jusqu'à l'extrémité libre de la partie de mise en prise (46).

4. Structure de connexion de batterie selon la revendication 3, dans laquelle la pluralité de nervures s'étendent le long d'une direction axiale de la partie de mise en prise (46) et sont prévues à intervalles dans une direction circonférentielle de la partie de mise en prise (46).

5. Structure de connexion de batterie selon la revendication 4, dans laquelle la partie de mise en prise (46) comprend la pluralité de fentes (48) prévues à intervalles dans une direction circonférentielle, et
la saillie de mise en prise (50) est prévue dans une zone entre les fentes (48) sur la partie de mise en prise (46).

6. Structure de connexion de batterie selon l'une des revendications 1 à 5, dans laquelle l'élément de connexion (40) comprend, de manière solidaire, deux des parties de connexion (42) positionnées à intervalles l'une de l'autre, et deux des parties de mise en prise (46) faisant saillie de la partie de connexion (42), et une partie de couplage (44) qui couple les deux parties de connexion (42) entre elles.

7. Structure de connexion de batterie selon la revendication 6, dans laquelle la partie de couplage (44) est formée de manière élastiquement déformable dans une direction dans laquelle les deux parties de connexion (42) viennent en contact et se séparent.

8. Structure de connexion de batterie selon la revendication 7, dans laquelle la partie de couplage (44) est formée de manière élastiquement déformable dans une direction dans laquelle les deux parties de mise en prise (46) sont mutuellement déplacées dans une direction de rotation.

9. Structure de connexion de batterie selon l'une des revendications 1 à 8, dans laquelle l'élément de ressort (52) comprend un corps de ressort cylindrique (52a) qui comprend une fente (54) s'étendant à partir d'une extrémité à l'autre extrémité dans une direction axiale.

10. Structure de connexion de batterie selon la revendication 9, dans laquelle une partie d'extrémité sur un côté d'insertion du corps de ressort (52a) est formée selon une forme progressivement rétrécie.

11. Structure de connexion de batterie selon la revendication 9, dans laquelle le corps de ressort (52a) comprend une encoche (55) formée sur une partie d'extrémité d'un côté d'insertion du corps de ressort (52a).

12. Structure de connexion de batterie selon l'une des revendications 9 à 11, dans laquelle l'élément de ressort (52) comprend une bride annulaire prévue sur une extrémité opposée à l'extrémité sur le côté d'insertion du corps de ressort (52a).

13. Structure de connexion de batterie selon l'une des revendications 1 à 12, dans laquelle l'élément de connexion (40) est formé avec l'un parmi l'aluminium ou l'alliage d'aluminium, le cuivre pur ou l'alliage de cuivre, et un métal à base de nickel.

14. Appareil de batterie secondaire comprenant :
une pluralité d'éléments de batterie comprenant une borne d'électrode cylindrique (23) et agencés respectivement côte à côte ;
un boîtier logeant la pluralité d'éléments de batterie ; et
une structure de connexion de batterie selon l'une quelconque des revendications 1 à 13.
